Europäisches Patentamt

European Patent Office

Office européen des brevets

(19)

(11) Veröffentlichungsnummer : **0 187 197**
**B1**

(12) # EUROPÄISCHE PATENTSCHRIFT

(45) Veröffentlichungstag der Patentschrift :
15.03.89

(21) Anmeldenummer : 85110951.2

(22) Anmeldetag : 30.08.85

(51) Int. Cl.⁴ : **G 21 C 19/10, B 66 C 1/66**

(54) **Vorrichtung zum gegenseitigen Verriegeln zweier verschieblich ineinander- oder nebeneinanderliegender, senkrecht oder schräg stehender Bauelemente.**

(30) Priorität : 20.12.84 DE 3446429

(43) Veröffentlichungstag der Anmeldung :
16.07.86 Patentblatt 86/29

(45) Bekanntmachung des Hinweises auf die Patenterteilung : 15.03.89 Patentblatt 89/11

(84) Benannte Vertragsstaaten :
BE FR GB IT

(56) Entgegenhaltungen :
DE--B-- 1 284 526
FR--A-- 1 188 167
FR--A-- 1 226 658
FR--A-- 2 502 600

(73) Patentinhaber : Kernforschungszentrum Karlsruhe GmbH ·
Weberstrasse 5 Postfach 3640
D-7500 Karlsruhe 1 (DE)

(72) Erfinder : Meier, Gerhard
Siemensallee 83
D-7500 Karlsruhe (DE)
Erfinder : Schleich, Helmut
Auf der Sieb 4
D-6456 Langenselbold (DE)

EP 0 187 197 B1

**Beschreibung**

Die Erfindung betrifft eine Vorrichtung zum gegenseitigen Verriegeln zweier Bauelemente gemäß dem Oberbegriff des Patentanspruches.

Zweck der Erfindung ist die Steuerung der Bewegungen von Armen eines Greifers und dessen Verriegelung in den Endpositionen.

Aus der DE-B 12 84 526 und dem DE-U 72 36 036 sind Verriegelungsvorrichtungen für zwei gegeneinander bewegliche und konzentrisch ineinanderliegende Bauelemente bekannt. Es handelt sich dabei jeweils um an Seilen befestigte Hülsen, denen einerseits eine Last aufgehängt ist und mit welchen andererseits eine Greifbewegung zum Erfassen der Last durch gegenseitiges axiales Verschieben der Hülsen bzw. Anheben gesteuert werden soll. Dies bedingt ein gegenseitiges Fixieren der Hülsen in verschiedenen Positionen. Zu diesem Zweck dient eine Steuerkurve mit verschiedenen Taschen bzw. Wendepunkten, in der einen bzw. der Verriegelungshülse, wobei in dieser Steuerkurve eine Kugel etwa mit der Hälfte ihres Querschnitts entlang geführt wird. Die andere Hälfte der Kugel ragt in eine Ringnut der zweiten bzw. der Traghülse. Werden nun die beiden Hülsen axial gegeneinander bewegt, so läuft die Kugel durch die Bewegung und unter der Schwerkraft von einer Tasche zur nächsten und verriegelt dort die beiden Hülsen gegeneinander.

Bei Kurven dieser Art besteht jedoch immer die Gefahr, daß die Kugel in der Bahn zurückläuft, weswegen eine sichere Funktion der Hülsen bzw. der daran befestigten Greifelemente nicht immer gewährleistet ist.

Aufgabe der vorliegenden Erfindung ist es nun, eine Verriegelungsvorrichtung der beschriebenen Art bzw. die Steuerkurve einer solchen so zu verbessern, daß der sichere Kugelumlauf in der vorgegebenen Richtung immer gewährleistet ist.

Zur Lösung dieser Aufgabe schlägt nun die vorliegende Erfindung die Merkmale bzw. die Merkmalskombination vor, die im Kennzeichen des Patentanspruches angegeben ist.

Der wesentliche Vorteil der Erfindung besteht nun darin, daß in der Steuerkurve bzw. Kugellaufbahn eine Rücklaufsperre vorhanden ist, die den gewünschten Kugelumlauf in einer Richtung in jedem Betriebszustand sicherstellt. Deswegen eignet sich die Verriegelungsvorrichtung besonders gut für Greifer, bei welchen ein führungsfreies und sicheres Arbeiten auch unter den Bedingungen der Unzugänglichkeit stets gewährleistet sein muß. Bei der vorliegenden Erfindung wird das Zurücklaufen der Kugel dadurch verhindert, daß die Wendepunkte der Steuerkurve als Taschen ausgebildet sind, die vertieft sind. Dadurch fällt die Kugel in die jeweilige Tasche des Wendepunktes und wird durch die Verriegelungshülse auf den Grund der Steuernut gedrückt, so daß sie bei der weiterführenden Bewegung wie in einer Schiene an dem Teil der Steuernut, aus dem sie gekommen ist vorbeigeführt wird.

Weitere Einzelheiten der vorliegenden Erfindung werden im folgenden und anhand der Figuren 1 bis 6 näher erläutert.

Die Figur 1a-d zeigt den Ablauf eines Schaltvorganges in den einzelnen Schaltpositionen A-D am Beispiel des Oberteiles eines Greifers,

die Figur 2 eine Draufsicht auf die Steuernut in vergrößerter Darstellung,

die Figuren 3 und 4 die Schnitte EF und GH der Figur 2,

die Figuren 5 und 6 die Schnitte IK und LM der Figur 2.

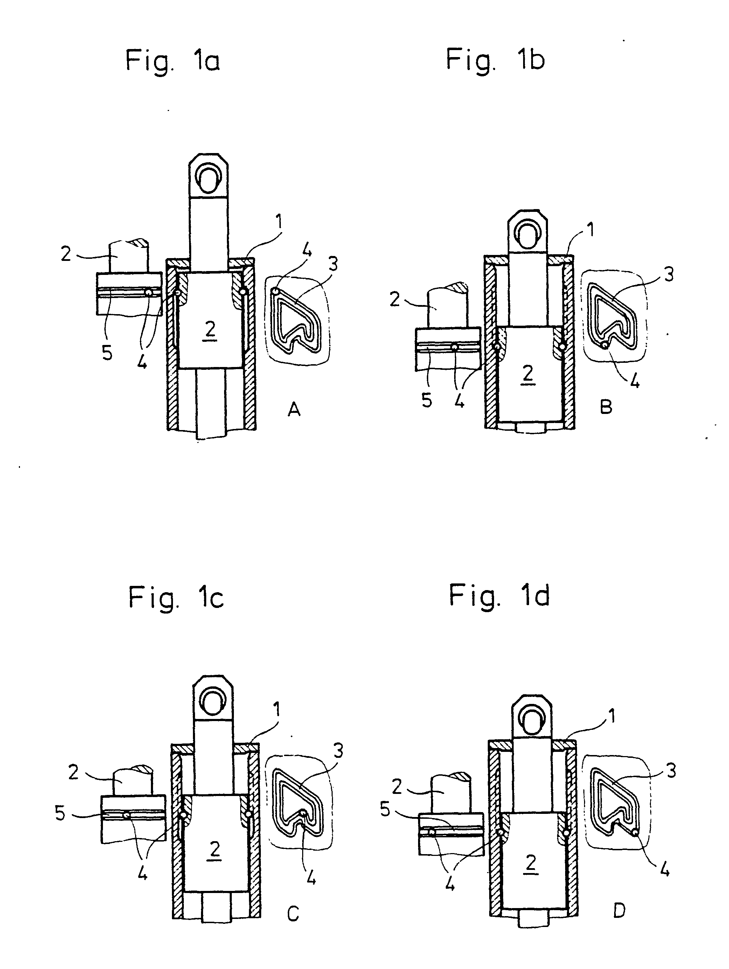

In den Figuren 1a bis 1d sind zwei Hülsen 1 und 2 eines Greiferoberteiles dargestellt, die ineinanderliegen und axial gegeneinander verschieblich sind. An der äußeren Traghülse 1 hängt unten mittels Greiferarmen gefaßt eine nicht dargestellte Last, an der inneren 2 ist oben ein Hebezeug oder Seil angehängt. Die innere Verriegelungshülse 2 steuert die Auf- und Zufunktion des Greifers durch Relativbewegung gegen die äußere Hülse 1. Die Figuren 1a bis 1d zeigen nun den Ablauf eines Schaltvorganges mittels der Steuernut 3 in ihren vier Schaltpositionen A, B, C und D mit der Kugel 4.

Aus der Position A rollt die Kugel 4 in der Steuernut 3 durch Abwärtsbewegen der Verriegelungshülse bzw. -platte 2 in den ersten unteren Schaltpunkt B bzw. in die diesem zugehörige Tasche. Beim Abheben gelangt die Kugel 4 in den unteren Arbeitspunkt C und blockiert damit die Aufwärtsbewegung der Verriegelungshülse 2. Die Last an der Traghülse 1 ist jetzt gegriffen und gesichert. Beim nachfolgenden Absetzen gelangt die Kugel 4 in die Tasche des zweiten unteren Schaltpunktes D und von dort in den oberen Arbeitspunkt A, wenn die Verriegelungshülse 2 wieder angehoben wird. Die Last an der Traghülse 1 wird freigegeben, da die nicht dargestellten Greifarme in dieser Stellung abheben. Die ganze Einheit kann nun abgenommen werden. Zur Steuerung des Vorganges mit noch weiteren Funktionen können auch Dreipunktschaltkurven mit dann bis zu sechs Taschen eingesetzt werden.

Bei herkömmlichen Steuerkurven verlief die Steuernut 3 in einer Ebene bezogen auf die Laufbahn der Kugelmitte. Diese Ebene ist oft auch zylinderförmig gekrümmt, d. h. auf einer Zylinderoberfläche bzw. einer Hülse aufgebracht. Durch den Verlauf in einer Ebene kann es nun zu Fehlschaltungen kommen, da die Kugel 4 z. B. aus der Stellung C nicht nach D sondern nach B rollt und beim Aufwärtsfahren der Verriegelungshülse 2 wieder zurück in die Stellung C gelangen kann.

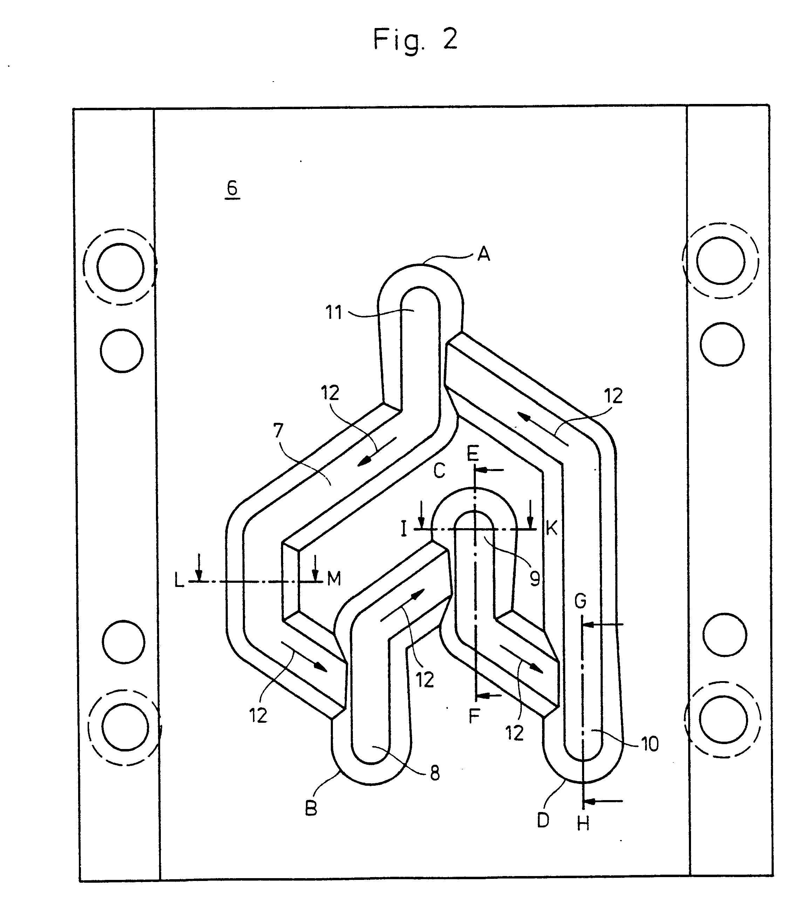

In den Figuren 2 bis 6 ist nun eine Kurvenform dargestellt, die in dieser Hinsicht erheblich verbessert ist.

Die Figur 2 zeigt dabei eine ähnliche Kurvenform der Steuernut 7 wie die in der Figur 1 dargestellte mit je zwei Schalt- und zwei Arbeitspunkten für zwei Positionen der nicht mehr extra dargestellten Traghülse, auf deren Innenseite die die Kurve tragende Grundplatte 6 aufgebracht ist. Die Steuerkugel 4 sowie die Ring- oder Quernut 5 an der Verriegelungshülse gemäß den Figuren 1a-d sind in der Figur 2 der Übersichtlichkeit halber nicht mehr dargestellt und für die Darstellung der neuen Merkmale nicht wesentlich.

Die Steuernut 7 weist folgende Punkte mit den entsprechenden und parallel oder schräg zur Schwerkraft gerichteten Taschen auf :

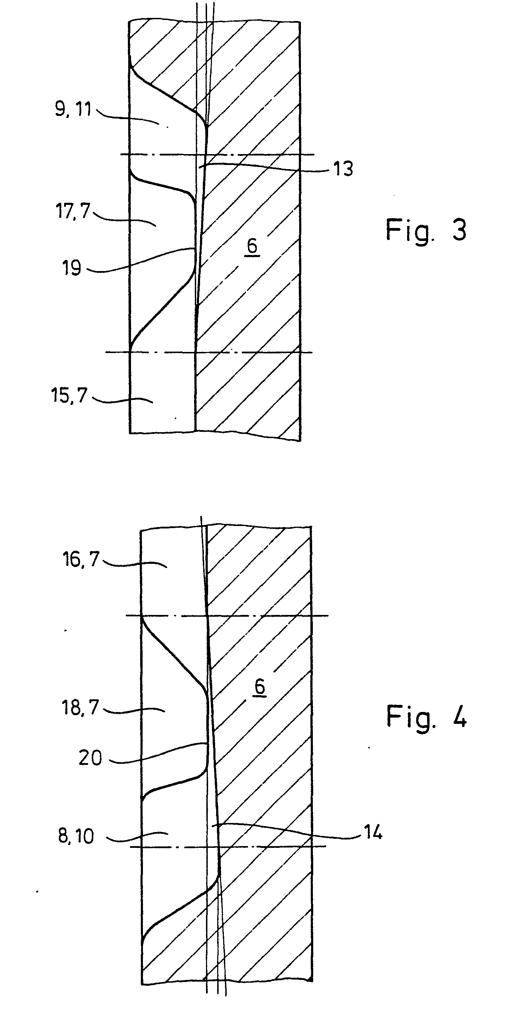

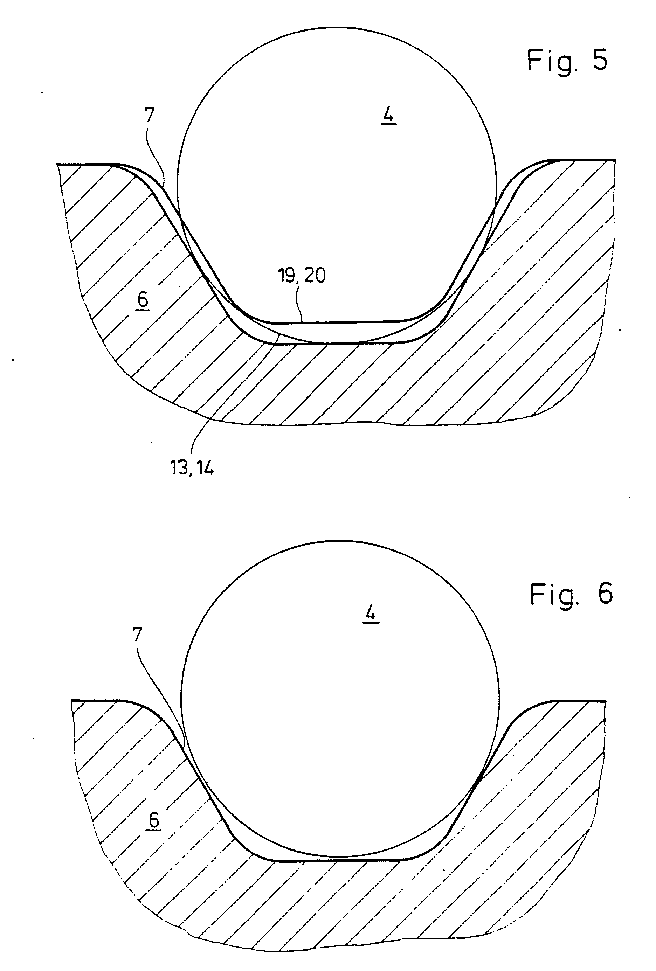

Erster unterer Schaltpunkt B, Tasche 8 unterer Arbeitspunkt C, Tasche 9 zweiter unterer Schaltpunkt D, Tasche 10 oberer Arbeitspunkt A, Tasche 11, die Kugel läuft dabei in Laufrichtung 12. Die Schalt- bzw. Arbeitspositionen und -funktionen entsprechen denen der Figuren 1a-d. Die Besonderheiten der Steuernut 7, deren Normalquerschnitt in der Figur 6 mit einer Kugel 4 dargestellt ist, gehen aus den Schnitten gemäß den Figuren 3, 4 und 5 hervor.

Die Taschen 8, 9, 10 und 11 besitzen, bezogen auf die gekrümmte oder abgewinkelte Ebene der Steuernut 7 eine zusätzliche Vertiefung 13 bzw. 14 gegenüber der normalen Tiefe der Laufbahn der Steuernut 7. Diese Vertiefung 13, 14 geht stufenlos in einen Teil 15, 16 der Steuernut 7 über, in den die Kugel beim Schaltvorgang weiterläuft. Gegenüber einem Teil 17, 18 der Steuernut 7, aus dem die Kugel kommt, wird ein kleiner Absatz 19, 20 gebildet, der ein Zurückrollen der Kugel in seine Richtung verhindert.

Es wird somit eine Vorrichtung zum gegenseitigen Verriegeln zweier verschieblich ineinander- oder nebeneinanderliegender, senkrecht oder schräg stehender Bauelemente, z. B. der an einem Seil hängenden Traghülse bzw. -platte 1 und einer mit einer Last versehenen Verriegelungshülse bzw. -platte 2 als Gegenstück durch gegenseitiges senkrechtes Bewegen der beiden Hülsen geschaffen. Dazu dient eine, in die Oberfläche der Traghülse bzw. -platte 1 oder 6 eingebrachte endlose Steuernut 3, 7 mit mehreren, im Kurvenverlauf senkrecht bzw. schräg oder parallel zur Schwerkraft gerichteten, abwechselnd nach oben und unten gelegenen Taschen 8, 9, 10, 11. In der Steuernut 3, 7 läuft die Kugel 4 größeren Durchmessers als der Querschnitt der Steuernut 3, 7. Die Verriegelungshülse bzw. -platte 2 besitzt auf ihrer, der Traghülse bzw. -platte 1, 6 gegenüberliegende Seite als Gegenstück eine Ring- bzw. Quernut 5, deren Querschnitt der Differenz von Steuernut- und Kugelquerschnitt entspricht. Diese Quer- bzw. Ringnut 5 überstreicht beim Bewegen der Verriegelungshülse bzw. -platte 2 gegen die Traghülse bzw. -platte 1, 6 den gesamten Kurvenverlauf der Steuernut 3, 7 und bewegt die Kugel 4 in der Steuernut 3, 7 von jeweils einer Tasche 8, 9, 10, 11 in die nächste Wesentlich ist nun, daß die Taschen 8, 9, 10, 11 mit einer Vertiefung 13, 14 gegenüber dem Teil 17, 18 der Laufbahn der Steuernut 3, 7 versehen sind, aus welchem die Kugel 4 in die jeweilige Tasche 8, 9, 10, 11 gelangt und daß die Vertiefung 13, 14 in einer Schräge stufenlos in den Teil 15, 16 der Laufbahn der Steuernut 7, 3 zurückführt, in welchen die Kugel 4 aus der jeweiligen Tasche 8, 9,

10, 11 gelangt und der dann zur nächsten Tasche weiterführt.

Bezugszeichenliste :

A oberer Arbeitspunkt
B erster unterer Schaltpunkt
C unterer Arbeitspunkt
D zweiter unterer Schaltpunkt

1 Traghülse bzw. -platte
2 Verriegelungshülse bzw. -platte
3 Steuernut
4 Kugel
5 Ring- bzw. Quernut
6 Grundplatte
7 Steuernut
8 Tasche zu B
9 Tasche zu C
10 Tasche zu D
11 Tasche zu A
12 Laufrichtung
13 Vertiefung
14 Vertiefung
15 Nutteil
16 Nutteil
17 Nutteil
18 Nutteil
19 Absatz
20 Absatz

**Patentanspruch**

Vorrichtung zum gegenseitigen Verriegeln zweier verschieblich ineinander- oder nebeneinanderliegender senkrecht oder schräg stehender Bauelemente, z. B. einer an einem Seil hängenden Traghülse bzw. -platte und einer mit einer Last versehenen Verriegelungshülse bzw. -platte als Gegenstück durch gegenseitiges, senkrechtes Bewegen der beiden Hülsen, wobei

a) in die Oberfläche der Traghülse bzw. -platte (1) eine endlose Steuernut (3 ; 7) mit mehreren, im Kurvenverlauf senkrecht bzw. schräg oder parallel zur Schwerkraft gelegenen, abwechselnd nach oben und unten gerichteten Taschen (8, 9, 10, 11) eingebracht ist,

b) in der Steuernut (3 ; 7) eine Kugel (4) verläuft,

c) die Verriegelungshülse bzw. -platte (2) auf ihrer, der Traghülse bzw. -platte (1) gegenüberliegenden Seite als Gegenstück eine Ring- bzw. Quernut (5) besitzt, deren Querschnitt der Differenz von Steuernut- und Kugelquerschnitt entspricht,

d) die Quer- bzw. Ringnut (5) beim Bewegen der Verriegelungshülse bzw. -platte (2) gegen die Traghülse bzw. -platte (1) den gesamten Kurvenverlauf der Steuernut (3 ; 7) überstreicht und die Kugel (4) in der Steuernut (3 ; 7) von jeweils einer Tasche (8, 9, 10, 11) in die nächste bewegt, gekennzeichnet dadurch, daß

e) die Taschen (8, 9, 10, 11) mit einer Vertiefung (13 ; 14) gegenüber einem Teil (17 ; 18) der Laufbahn der Steuernut (7) versehen sind, aus welcher die Kugel (4) mit größerem Durchmesser als dem Querschnitt der Steuernut (7) in die jeweilige Tasche (8, 9, 10, 11) gelangt und durch welche ein kleiner Absatz (19 ; 20) gebildet wird,

f) die Vertiefung (13 ; 14) in einer Schräge stufenlos in einen Teil (15, 16) der Laufbahn der Steuernut (7) zurückführt, in welchen die Kugel (4) aus der jeweiligen Tasche (8, 9, 10, 11) gelangt und der zur nächsten Tasche führt.

### Claim

Device for mutually latching two vertical or oblique construction members slidably positioned in or next to one another, e. g. a supporting sleeve or plate, which is suspended on a cable, and a latching sleeve or plate as the counterpart, which is provided with a load, by means of mutual, vertical displacement of the two sleeves, wherein

a) an endless guide groove (3 ; 7) is provided in the surface of the supporting sleeve or plate (1) and has a plurality of alternately upwardly and downwardly orientated pockets (8, 9, 10, 11), which are located in the path of a curve, vertically or respectively obliquely, or parallel to the force of gravity ;

b) a ball (4) travels in the guide groove (3 ; 7) ;

c) the latching sleeve or plate (2) has, on its side opposite the supporting sleeve or plate (1), as a counterpart, an annular or transverse groove (5), the cross-section of which corresponds to the difference between the cross-sections of the guide groove and ball ;

d) the transverse or annular groove (5), upon displacement of the latching sleeve or plate (2) relative to the supporting sleeve or plate (1), extends over the entire curved path of the guide groove (3 ; 7), and the ball (4) in the guide groove (3 ; 7) moves from one respective pocket (8, 9, 10, 11) into the next ;
characterised in that

e) the pockets (8, 9, 10, 11) are provided with a recess (13 ; 14) opposite a portion (17 ; 18) of the path of the guide groove (7), from which the ball (4), with a greater diameter than the cross-section of the guide groove (7), passes into the respective pocket (8, 9, 10, 11) and whereby a small shoulder portion (19 ; 20) is formed ;

f) the recess (13 ; 14) extends back at an oblique angle steplessly into a portion (15, 16) of the path of the guide groove (7), into which portion the ball (4) passes from the respective pocket (8, 9, 10, 11), and which portion extends to the next pocket.

### Revendication

Dispositif pour verrouiller mutuellement deux pièces de construction, coulissantes l'une dans l'autre ou juxtaposées, dans une position verticale ou oblique, par exemple une douille de support ou plaque de support accrochée à un câble, et une douille de verrouillage ou plaque de verrouillage, munie d'une charge et jouant le rôle de pièce homologue lors d'un mouvement vertical mutuel des deux douilles, dans lequel :

a) une rainure (3, 7) de guidage sans fin est pratiquée dans la surface de la douille de support ou plaque de support, avec plusieurs poches (8, 9, 10, 11) disposées dans le déroulement de la courbe, orientées verticalement ou en biais, ou parallèlement à la direction de la verticale, et tournées alternativement vers le haut et vers le bas ;

b) une bille (4) se déplace dans la rainure (3, 7) de commande,

c) la douille (2) de verrouillage ou plaque (2) de verrouillage possède, sur son côté opposé à la douille (1) de support ou plaque (1) de support jouant le rôle de pièce homologue, une rainure annulaire ou transversale (5), dont la section transversale correspond à la différence des sections transversales de la rainure de commande et de la bille ;

d) la rainure transversale ou annulaire (5), lors du déplacement de la douille (2) de verrouillage ou plaque (2) de verrouillage contre la douille (1) de support ou plaque (1) de support, recouvre le déroulement complet de la courbe de la rainure (3, 7) de commande et déplace la bille (4) dans la rainure (3, 7) de commande chaque fois d'une poche (8, 9, 10, 11) à la suivante ; caractérisé en ce que :

e) les poches (8, 9, 10, 11) sont pourvues d'un renfoncement (13, 14) par rapport à une partie (17, 18) de la ligne de course de la rainure (7) de commande, et la bille (4), ayant un diamètre plus grand que la section transversale de la rainure (7) de commande, quitte cette partie (17, 18) et arrive dans la poche correspondante (8, 9, 10, 11) et dans laquelle est formé un petit palier (19, 20) ;

f) le renfoncement (13, 14) ramène la bille (4) selon une pente sans gradin dans une partie (15, 16) de la ligne de la rainure (7) de commande, la bille (4) venant de la poche correspondante (8, 9, 10, 11) et arrivant dans cette partie (15, 16), la bille étant ensuite guidée vers la poche suivante.

Fig. 1a

Fig. 1b

A

B

Fig. 1c

Fig. 1d

C

D

# Fig. 2

Fig. 3

Fig. 4

Fig. 5

7

4

6

19, 20

13, 14

Fig. 6

7

4

6